(19) **Europäisches Patentamt / European Patent Office / Office européen des brevets**

(11) **EP 2 826 544 A1**

(12) # EUROPEAN PATENT APPLICATION
published in accordance with Art. 153(4) EPC

(43) Date of publication:
**21.01.2015 Bulletin 2015/04**

(21) Application number: **13760837.8**

(22) Date of filing: **01.02.2013**

(51) Int Cl.:
**B01D 69/04** (2006.01)   **B01D 69/10** (2006.01)
**B01D 71/02** (2006.01)   **B01D 71/64** (2006.01)

(86) International application number:
**PCT/JP2013/052366**

(87) International publication number:
**WO 2013/136869 (19.09.2013 Gazette 2013/38)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **16.03.2012   JP 2012060907**

(71) Applicant: **NGK Insulators, Ltd.**
**Nagoya-shi, Aichi 467-8530 (JP)**

(72) Inventors:
• **WADA, Ichiro**
**Nagoya-shi**
**Aichi 467-8530 (JP)**

• **SAKAI, Tetsuya**
**Nagoya-shi**
**Aichi 467-8530 (JP)**
• **ICHIKAWA, Akimasa**
**Nagoya-shi**
**Aichi 467-8530 (JP)**
• **SUZUKI, Hideyuki**
**Nagoya-shi**
**Aichi 467-8530 (JP)**

(74) Representative: **TBK**
**Bavariaring 4-6**
**80336 München (DE)**

(54) **PROCESS FOR PRODUCING SEPARATION MEMBRANE, PROCESS FOR PRODUCING SEPARATION MEMBRANE COMPOSITE, AND SEPARATION MEMBRANE COMPOSITE**

(57)   There is disclosed a process for producing a separation membrane which is capable of effectively inhibiting generation of a thick membrane portion where a thickness of the separation membrane partially increases. The process for producing the separation membrane includes a membrane forming step of passing a precursor solution 31 of the separation membrane through cells 2 of a monolith substrate 1 to form a separation membrane precursor 3 made of the precursor solution 31 on the surfaces of the cells 2; and then a cell suction step of sucking the insides of the cells 2 from open ends of the cells 2 in a first end face 11 of the monolith substrate 1, to suck and remove an excess portion of the precursor solution 31 which is present in the cells 2.

FIG.4

**Description**

Technical Field

The present invention relates to a process for producing a separation membrane, a process for producing a separation membrane composite, and a separation membrane composite. More particularly, it relates to a process for producing a separation membrane which is capable of effectively inhibiting generation of a thick membrane portion where a thickness of the separation membrane partially increases, a process for producing a separation membrane composite, and a separation membrane composite including the separation membrane obtained by the above process for producing the separation membrane.

Background Art

In recent years, from the viewpoint of environmental protection or effective utilization of a waste material, much attention has been paid to production of ethanol in which a biomass technology is utilized. Heretofore, as a method of recovering ethanol produced by such a biomass technology, there has been known a method in which a selective permeability of a zeolite membrane is utilized. This is a method in which a liquid mixture obtained from a woody biomass and containing water and ethanol is brought into contact with the zeolite membrane, thereby only allowing the water to selectively permeate the zeolite membrane, so that ethanol is separated from the water.

Additionally, in the liquid mixture obtained from the woody biomass, an organic acid such as acetic acid is mixed in addition to the water and ethanol, but the zeolite membrane usually has a low acid resistance, and consequently, there is a concern over degradation of a separation performance or early deterioration due to the organic acid.

Therefore, in recent years, studies have been conducted to utilize, in the separation of the water and an organic solvent such as ethanol, a carbon membrane which has heretofore been used mainly in the separation of a specific component from a gas mixture. The carbon membrane has an excellent acid resistance as compared with the zeolite membrane, and exerts a stable separation performance over a long period of time even in the presence of the organic acid. As a typical use configuration of the carbon membrane for use in such a purpose, a configuration has been known in which the carbon membrane is deposited on the surfaces of cells formed in a porous monolith substrate.

An example of a process for producing such a separation membrane is a process for producing the carbon membrane as described in the following. First, a precursor solution of the separation membrane is passed through a plurality of cells formed in a porous monolith substrate, to form a separation membrane precursor on the surfaces of the cells. An example of the separation membrane precursor is a polyamide acid membrane. Next, the monolith substrate is placed into a drier, to dry the separation membrane precursor. Afterward, the dried separation membrane precursor is thermally decomposed and carbonized in a reducing atmosphere such as a nitrogen atmosphere, to form the carbon membrane (e.g., see Patent Document 1). In a step of forming the separation membrane precursor, a method of passing the precursor solution of the separation membrane through a plurality of cells is referred to as a dip coating method sometimes.

Furthermore, as the process for producing the separation membrane, there has been suggested a process for producing a separation membrane in which the drying of a separation membrane precursor is performed by passed-air drying to pass hot air through cells (e.g., see Patent Documents 2 and 3). In such a conventional process for producing the separation membrane, a step of forming the separation membrane precursor and a step of drying the separation membrane precursor are repeatedly performed a plurality of times, whereby the separation membrane having a desirable separation performance is produced. Hereinafter, the step of forming the separation membrane precursor is referred to as "the membrane forming step" sometimes. The step of drying the separation membrane precursor is referred to as "the drying step" sometimes.

Citation List

Patent Documents

[Patent Document 1] JP-A-2003-286018
[Patent Document 2] WO 2008/078442
[Patent Document 3] JP-A-2010-89000

## Summary of the Invention

## Problem to be Solved by the Invention

However, in a conventional process for producing a separation membrane, there has been the problem that a thickness of the obtained separation membrane disadvantageously partially increases. In particular, when the abovementioned membrane forming step of a dip coating method, an end portion of a monolith substrate on one side is unevenly coated with a precursor solution, which remarkably frequently causes the problem that the thickness of the obtained separation membrane disadvantageously partially increases. Hereinafter, portions where the thickness of the separation membrane disadvantageously partially increases will be referred to as a thick membrane portion sometimes. When such a thick membrane portion is present in the separation membrane, cracks are easily generated from this thick membrane portion. Furthermore, when the separation membrane is deposited on the surfaces of the cells of the monolith substrate, the separation membrane easily peels from the thick membrane portion. When there occurs the defect that the cracks are generated in the separation membrane or that the separation membrane disadvantageously peels from the monolith substrate, a degree of vacuum of the defective portion becomes worse as compared with another sound portion. Furthermore, when the defective portion is generated in the separation membrane, a separation performance of the separation membrane also worsens.

The present invention has been developed in view of the abovementioned problems, and there are provided a process for producing a separation membrane which is capable of effectively inhibiting generation of a thick membrane portion where a thickness of the separation membrane partially increases, and a process for producing a separation membrane composite. Furthermore, the present invention provides a separation membrane composite including a separation membrane obtained by such a process for producing the separation membrane.

## Means for Solving the Problem

According to the present invention, there are provided a process for producing a separation membrane, a process for producing a separation membrane composite, and a separation membrane composite in the following.

[1] A process for producing a separation membrane including a membrane forming step of passing a precursor solution of the separation membrane through cells of a tubular porous monolith substrate in which a plurality of cells are formed to extend from a first end face to a second end face, to form a separation membrane precursor made of the precursor solution on the surfaces of the cells; a cell suction step of sucking the insides of the cells on which the separation membrane precursor is formed, from open ends of the cells in the first end face or the second end face of the monolith substrate; and a drying step of drying the separation membrane precursor formed on the surfaces of the cells of the monolith substrate in which the insides of the cells are sucked.

[2] The process for producing the separation membrane according to the above [1], wherein in the cell suction step, the monolith substrate is disposed so that the open ends of the cells in the first end face of the monolith substrate are opened downward in a vertical direction and so that the cells extend in the vertical direction, and the insides of the cells are sucked from the open ends of the cells in the first end face of the monolith substrate.

[3] The process for producing the separation membrane according to the above [2], wherein in the cell suction step, the monolith substrate is disposed so that the cells extend in the vertical direction, the state is held for 60 minutes or less, and then the insides of the cells are sucked from the open ends of the cells in the first end face of the monolith substrate.

[4] The process for producing the separation membrane according to any one of the above [1] to [3], wherein a ratio of a mass of the precursor solution to be sucked from the insides of the cells in the cell suction step to a mass of the precursor solution adhered to the insides of the cells in the membrane forming step is from 0.5 to 2.5%.

[5] The process for producing the separation membrane according to any one of the above [1] to [4], wherein the drying step is a step of performing passed-air drying in which hot air is passed through the cells to dry the separation membrane precursor.

[6] The process for producing the separation membrane according to any one of the above [1] to [5], wherein the membrane forming step, the cell suction step and the drying step are performed as one set of steps, and the one set of steps are repeatedly performed twice or more.

[7] The process for producing the separation membrane according to any one of the above [1] to [6], further including a carbonizing step of thermally decomposing and carbonizing the separation membrane precursor dried by the drying step to obtain the separation membrane.

[8] The process for producing the separation membrane according to any one of the above [1] to [7], wherein the precursor solution is a polyamide acid solution.

[9] The process for producing the separation membrane according to the above [8], wherein in the drying step, the separation membrane precursor is dried and imidized.

[10] The process for producing the separation membrane according to any one of the above [1] to [9], wherein at least a part of an outer peripheral surface of the monolith substrate is sealed, and then the membrane forming step is performed.

[11] A process for producing a separation membrane composite, including producing a separation membrane in cells of a tubular porous monolith substrate in which the plurality of cells are formed to extend from a first end face to a second end face by the process for producing the separation membrane according to any one of the above [1] to [10], to produce the separation membrane composite including the monolith substrate and the separation membrane.

[12] A separation membrane composite including a tubular porous monolith substrate in which a plurality of cells are formed to extend from a first end face to a second end face; and a separation membrane deposited on the surfaces of the cells, wherein a ratio of the number of the cells which do not have a thick membrane portion where a thickness of the separation membrane is 5 $\mu$m or more to the number of all the cells is 80% or more.

[13] The separation membrane composite according to the above [12], wherein the separation membrane is a carbon membrane.

[14] The separation membrane composite according to the above [12] or [13], wherein an average thickness of the separation membrane deposited on the surfaces of the cells is from 0.1 to 3 $\mu$m.

Effect of the Invention

According to a process for producing a separation membrane and a process for producing a separation membrane composite in the present invention, it is possible to effectively inhibit generation of a thick membrane portion where a thickness of the separation membrane partially increases. That is, the process for producing the separation membrane of the present invention includes, after a membrane forming step, a cell suction step of sucking the insides of cells on which a separation membrane precursor is formed, from open ends of the cells in a first end face or a second end face of a monolith substrate. By this cell suction step, an excessive precursor solution partially thickly applied to the surfaces of the cells is sucked, so that the separation membrane precursor having a uniform membrane thickness can be obtained. In consequence, it is possible to effectively inhibit the generation of the thick membrane portion where the thickness of the separation membrane partially increases.

Furthermore, the separation membrane composite of the present invention includes a tubular porous monolith substrate in which a plurality of cells are formed to extend from a first end face to a second end face, and a separation membrane deposited on the surfaces of the cells of the monolith substrate. Furthermore, in the separation membrane composite of the present invention, a ratio of the number of the cells which do not have a thick membrane portion where a thickness of the separation membrane is 5 $\mu$m or more to the number of all the cells is 80% or more. In the separation membrane composite of the present invention, the separation membrane dose not easily peels from the surfaces of the cells, and damages such as cracks also are not easily generated in the separation membrane. Furthermore, defects such as the abovementioned peeling of the separation membrane and the cracks in the separation membrane are not easily generated as described above, and hence a separation performance of the separation membrane does not easily deteriorate, so that a suitable separation performance can be maintained.

Brief Description of the Drawings

Fig. 1 is a perspective view schematically showing a monolith substrate for use in one embodiment of a process for producing a separation membrane of the present invention;

Fig. 2 is an explanatory view schematically showing one example of a membrane forming step in the one embodiment of the process for producing the separation membrane of the present invention;

Fig. 3 is a perspective view schematically showing the monolith substrate on which a separation membrane precursor obtained in the membrane forming step is formed;

Fig. 4 is a perspective view schematically showing one example of a cell suction step in the one embodiment of the process for producing the separation membrane of the present invention;

Fig. 5A is an explanatory view to explain a step of successively sucking the insides of cells in the cell suction step;

Fig. 5B is an explanatory view to explain the step of successively sucking the insides of the cells in the cell suction step;

Fig. 5C is an explanatory view to explain the step of successively sucking the insides of the cells in the cell suction step;

Fig. 6 is an explanatory view showing one example of a drying step in the one embodiment of the process for producing the separation membrane of the present invention;

Fig. 7 is a perspective view schematically showing one embodiment of a separation membrane composite of the present invention;

Fig. 8 is a sectional view schematically showing a cross section cut in parallel with a cell extending direction in the one embodiment of the separation membrane composite of the present invention;

Fig. 9 is a schematic view of a pervaporation device used in evaluation of a water/ethanol separation performance in examples;

Fig. 10 is a graph showing a relation between a suction amount (%) and an ethanol permeation flow rate (kg/m$^2$h) in the respective examples and a comparative example;

Fig. 11 is a graph showing a relation between a water permeation flow rate (kg/m$^2$h) and the ethanol permeation flow rate (kg/m$^2$h) in the respective examples and the comparative example; and

Fig. 12 is a graph showing a relation between a generation ratio (%) of a thick membrane portion and the ethanol permeation flow rate (kg/m$^2$h).

Mode for Carrying out the Invention

Next, modes for carrying out the present invention will be described in detail with reference to the drawings. It should be understood that the present invention is not limited to the following embodiments and that design changes, improvements and the like are suitably added on the basis of ordinary knowledge of a person skilled in the art without departing from the gist of the present invention.

(1) Process for Producing Separation Membrane:

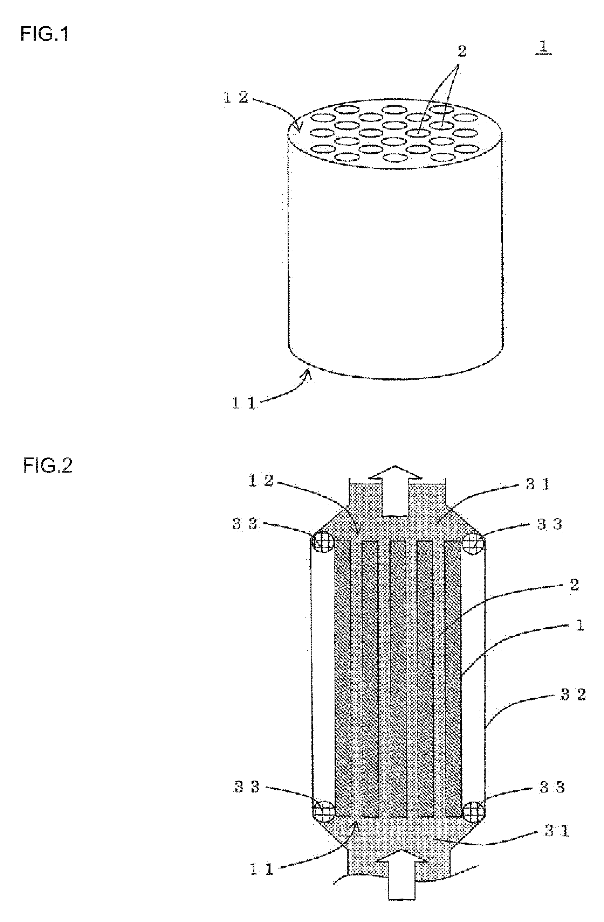

One embodiment of a process for producing a separation membrane of the present invention is a process for producing the separation membrane including a membrane forming step, a cell suction step, and a drying step. The process for producing the separation membrane of the present embodiment is the process for producing the separation membrane in which the separation membrane is formed on the surfaces of cells 2 of a monolith substrate 1 shown in Fig. 1. Fig. 1 is a perspective view schematically showing the monolith substrate for use in the one embodiment of the process for producing the separation membrane of the present invention.

The membrane forming step in the process for producing the separation membrane of the present embodiment is a step of passing a precursor solution of the separation membrane through the cells of the porous monolith substrate, to form a separation membrane precursor made of the precursor solution on the surfaces of the cells of the monolith substrate. The monolith substrate is a tubular monolith substrate in which the plurality of cells are formed to extend from a first end face to a second end face. Hereinafter, the first end face and the second end face of the monolith substrate will generically be referred to simply as "end faces" sometimes.

The cell suction step is a step of sucking the insides of the cells on which the separation membrane precursor is formed, from open ends of the cells in the first end face or the second end face of the monolith substrate. By this cell suction step, an excessive precursor solution partially thickly applied to the surfaces of the cells is sucked, so that the separation membrane precursor having a uniform membrane thickness can be obtained.

The drying step is a step of drying the separation membrane precursor formed on the surfaces of the cells of the monolith substrate in which the insides of the cells are sucked. By the abovementioned cell suction step, the separation membrane precursor having the uniform membrane thickness can be obtained, and hence such a drying step is performed, so that it is possible to effectively inhibit generation of a thick membrane portion where a thickness of the separation membrane partially increases. In the process for producing of the separation membrane of the present embodiment, the drying step is preferably a step of performing passed-air drying in which hot air is passed through the cells, to dry the separation membrane precursor.

In the process for producing the separation membrane of the present embodiment, the abovementioned membrane forming step, cell suction step and drying step may be performed as one set of steps, and this one set of steps may repeatedly be performed twice or more. For example, the precursor solution of the separation membrane is passed through the cells of the porous monolith substrate, thereby forming the separation membrane precursor made of the precursor solution on the surfaces of the cells. Next, the insides of the cells on which the separation membrane precursor is formed are sucked from open ends of the cells in the first end face or the second end face of the monolith substrate. Afterward, the separation membrane precursor formed on the surfaces of the cells of the monolith substrate in which the insides of the cells are sucked is dried. A series of steps herein are the abovementioned one set of steps. Afterward, by use of the monolith substrate in which the dried separation membrane precursor is deposited on the surfaces of the cells, the precursor solution of the separation membrane is passed through the cells of the monolith substrate in the same manner as described in the above, to further form the separation membrane precursor made of the precursor solution on the surfaces of the cells. In the second membrane forming step, the precursor solution is applied to the surface of the dried separation membrane precursor, to obtain a state where two layers of separation membrane precursor are laminated. Afterward, the cell suction step is performed again, and then the two laminated layers of separation membrane precursor are dried again. When the membrane forming step, the cell suction step and the drying step are performed as one set of steps and this one set of steps are repeatedly performed three times or more, a third membrane forming step, a third cell suction step and a third drying step are performed by use of the monolith substrate in which the second drying step is ended.

Hereinafter, each step of the process for producing the separation membrane of the present embodiment will further specifically be described.

(1-1) Membrane Forming Step:

In the process for producing the separation membrane of the present embodiment, first, as shown in Fig. 2, the precursor solution of the separation membrane is passed through the cells 2 formed in the porous monolith substrate 1, thereby forming the separation membrane precursor made of the precursor solution on the surfaces of the cells 2. By this membrane forming step, a precursor solution 31 is applied to the side of the surfaces of the cells 2, and the separation membrane precursor made of the precursor solution 31 is formed on the side of the surfaces of the cells 2. Fig. 2 is an explanatory view schematically showing one example of the membrane forming step in the one embodiment of the process for producing the separation membrane of the present invention.

Fig. 2 shows an example of a case where the monolith substrate 1 is received in a tubular membrane forming container 32 whose both ends in a longitudinal direction are opened, and the precursor solution 31 is allowed to flow into the cells 2 from the side of a second end face 12 of the monolith substrate 1, thereby performing the membrane forming step. When the monolith substrate 1 is received in the membrane forming container 32, the monolith substrate 1 is preferably airtightly fixed in the membrane forming container 32 by use of ring-like sealing materials 33 such as packings in a first end face 11 and the second end face 12 of the monolith substrate 1. Such a membrane forming step is referred to as the membrane forming step in which a dip coating method is used. Fig. 2 explains an example of the case where the precursor solution 31 is allowed to flow into the cells 2 from the side of the second end face 12 of the monolith substrate 1. However, for example, the upside and downside of the monolith substrate 1 may be inverted, and the precursor solution 31 may be allowed to flow into the cells 2 from the side of the first end face 11. The membrane forming step in the process for producing the separation membrane of the present embodiment is not limited to the membrane forming step in which the dip coating method is used as shown in Fig. 2. That is, a membrane forming step in a heretofore known process for producing a separation membrane can suitably be used, when the step includes applying a precursor solution to the side of the surfaces of cells, thereby making it possible to form a separation membrane precursor made of the precursor solution. An example of another membrane forming step is a membrane forming step in which a pouring-flowing method or the like is used.

In the membrane forming step in which the dip coating method is used, for example, the precursor solution is further preferably fed into the respective cells of the monolith substrate at a rate of about 0.3 to 300 cm/min from the second end face of the monolith substrate by use of a liquid feeding pump.

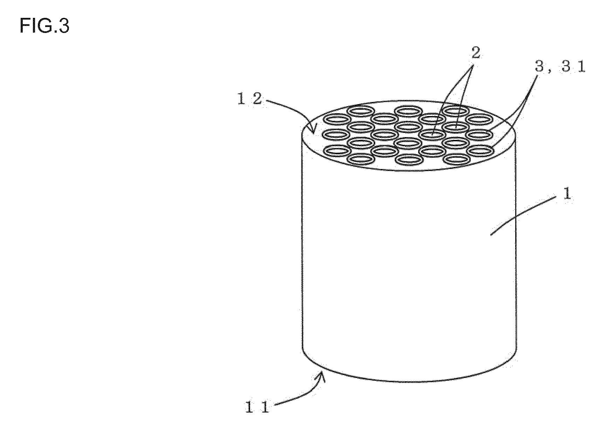

Furthermore, the membrane forming step of the process for producing the separation membrane of the present embodiment is preferably performed in a state where the monolith substrate 1 is disposed in the membrane forming container 32 so that the second end face 12 of the monolith substrate 1 is above the first end face 11 as shown in Fig. 2. This membrane forming step is further preferably performed in a state where an angle made by the extending direction of the cells 2 of the monolith substrate 1 and a vertical direction is in a range of -10° to 10°. Furthermore, in the membrane forming step, the angle made by the extending direction of the cells 2 of the monolith substrate 1 and the vertical direction is more preferably closer to 0°. By such a method, there is obtained the monolith substrate 1 in which a separation membrane precursor 3 made of the precursor solution is formed on the surfaces of the cells 2 of the monolith substrate 1 as shown in Fig. 3. Fig. 3 is a perspective view schematically showing the monolith substrate on which the separation membrane precursor obtained in the membrane forming step is formed.

As the precursor solution of the separation membrane for use in the membrane forming step, heretofore, it has been most preferable to use a polyamide acid solution broadly used in producing the separation membrane (e.g., a carbon membrane). The polyamide acid solution is obtained by dissolving polyamide acid which is a precursor of polyimide resin in an appropriate organic solvent such as N-methyl-2-pyrrolidone (NMP) or N, N-dimethyl acetamide (DMAc). There is not any restriction on a concentration of polyamide acid in the polyamide acid solution, but from the viewpoint of a viscosity at which a membrane of the solution is easily formed, the concentration is preferably from 1 to 20 mass%. The concentration of polyamide acid in the polyamide acid solution is further preferably from 3 to 15 mass%, and especially preferably from 5 to 10 mass%.

"The monolith substrate" in the present invention means a lotus root-like or honeycomb-like substrate in which a plurality of cells constituting through channels of a fluid and extending from a first end face to a second end face are formed in a columnar substrate having the first end face and the second end face. Suitable examples of a material of the monolith substrate include ceramic materials such as alumina, silica, cordierite, mullite, titania, zirconia, and silicon carbide from the viewpoint of a strength or a chemical stability. A porosity of the monolith substrate is preferably from 25 to 55% from the viewpoints of the strength and a permeability of the porous substrate. Furthermore, an average pore diameter of the porous substrate is preferably from 0.005 to 5 μm. The porosity and average pore diameter of the porous substrate are values measured by a mercury porosimeter.

As to a shape of the monolith substrate, for example, a shape of a cross section perpendicular to the cell extending direction is preferably a round shape, an oval shape, or a polygonal tubular shape. The whole outer diameter of the monolith substrate is preferably from 10 to 300 mm, further preferably from 20 to 250 mm, and especially preferably from 30 to 200 mm. When the whole outer diameter of the monolith substrate is smaller than 10 mm, the number of the cells which can be formed in the monolith substrate becomes small sometimes. Furthermore, when the whole outer diameter of the monolith substrate is in excess of 300 mm, the monolith substrate is excessively large, so that it is difficult to produce the separation membrane sometimes. In the present description, "the whole outer diameter of the monolith substrate" means a diameter of the cross section (i.e., a circle), when the shape of the cross section of the monolith substrate which is perpendicular to the cell extending direction is a circle. Furthermore, "the whole outer diameter of the monolith substrate" means a diameter of a circle which has the same size of sectional area as in the cross section when the shape of the cross section of the monolith substrate which is vertical to the cell extending direction is not the circle.

A length of the monolith substrate in the cell extending direction is preferably from 30 to 2000 mm, further preferably from 100 to 1700 mm, and especially preferably from 150 to 1500 mm. When the length of the monolith substrate in the cell extending direction is smaller than 30 mm, a membrane area of the separation membrane becomes small sometimes. When the length of the monolith substrate in the cell extending direction is in excess of 2000 mm, it is difficult to produce and handle the monolith substrate sometimes. Furthermore, in consideration of the membrane area per volume and the strength, the number of the cells to be formed in the monolith substrate is preferably from 1 to 10000, preferably from 10 to 5000, and preferably from 30 to 2500. When the number of the cells is in excess of 10000, it is difficult to produce and handle the monolith substrate sometimes.

Furthermore, in the membrane forming step, at least a part of an outer peripheral surface of the monolith substrate is preferably sealed by use of a sealing tape or the like, and then the membrane is formed. According to such a constitution, when the precursor solution is passed through the cells, it is possible to prevent the precursor solution from being adhered to a portion other than the surfaces of the cells.

Furthermore, in the membrane forming step, the whole monolith substrate or the surfaces of the cells on which the separation membrane precursor is formed may be preheated at 50 to 350°C and then the membrane formation may be performed. When such preheating is performed, the drying in the drying step can be accelerated, and the separation performance of the separation membrane to be finally obtained can be enhanced.

(1-2) Cell Suction Step:

In the process for producing the separation membrane of the present embodiment, after the above membrane forming step, there is performed the cell suction step of sucking the insides of the cells on which the separation membrane precursor is formed, from the open ends of the cells in the first end face or the second end face of the monolith substrate. Such a cell suction step is provided, whereby the excessive precursor solution partially thickly applied to the surfaces of the cells can be sucked, so that the separation membrane precursor having a uniform membrane thickness can be obtained. In consequence, it is possible to effectively inhibit the generation of the thick membrane portion where the thickness of the separation membrane partially increases.

In the membrane forming step of passing the precursor solution through the cells of the monolith substrate to form the separation membrane precursor, during the membrane formation, the precursor solution excessively remains in the cells, so that it is difficult to obtain the separation membrane precursor having the uniform membrane thickness sometimes. In particular, the excessive precursor solution excessively remaining in the cells is easily partially stored in part of the cells. That is, in the conventional process for producing the separation membrane, by the excessive precursor solution excessively remaining in the cells, the thickness of the separation membrane precursor disadvantageously locally increases, and even the obtained separation membrane has a thick membrane portion having a partially large membrane thickness.

In the process for producing the separation membrane of the present embodiment, prior to the drying step, the insides of the cells are sucked from the first end face or the second end face of the monolith substrate to suck and remove the excessive precursor solution which causes the generation of the thick membrane portion. In consequence, the thickness of the precursor solution applied to the side of the surfaces of the cells becomes more uniform. It is to be noted that the thick membrane portion is, for example, a portion having a membrane thickness of 5 μm or more.

There is not any restriction on a method of sucking the insides of the cells. However, for example, when the insides of the cells are sucked from the first end face of the monolith substrate, the second end face is preferably open to the air atmosphere, and a sucked gas preferably flows through the cells from this second end face toward the first end face. The excessive precursor solution joins this flow of the gas, and is discharged from the open ends of the cells in the first end face of the monolith substrate.

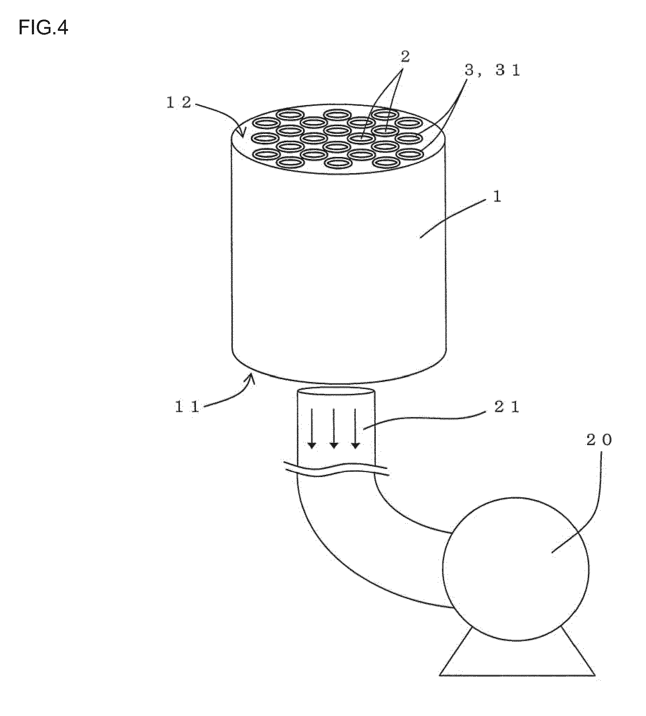

In the cell suction step, for example, as shown in Fig. 4, the monolith substrate 1 is preferably disposed so that the open ends of the cells 2 in the first end face 11 of the monolith substrate 1 are opened downward in a vertical direction and so that the cells 2 extend in the vertical direction, to perform the cell suction step. When the monolith substrate 1 is disposed so that the cells 2 extend in the perpendicular direction, the excessive precursor solution drips on the side of the first end face 11 due to a self-weight, and hence it is easier to suck and remove the excessive precursor solution from the downward open ends. Furthermore, on the surfaces of the cells 2, the precursor solution adhered to the surfaces of the cells 2 remains due to a surface tension, and hence the thickness of the separation membrane precursor formed on the surfaces of the cells 2 becomes more uniform. Fig. 4 is a perspective view schematically showing one example of the cell suction step in the one embodiment of the process for producing the separation membrane of the present invention.

Furthermore, as shown in Fig. 4, when the open ends of the cells 2 in the first end face 11 of the monolith substrate 1 are opened downward in the vertical direction, the insides of the cells 2 are more preferably sucked from the open ends of the cells 2 in the first end face 11. According to such a constitution, it is possible to positively suck the precursor solution which drips on the side of the first end face 11 of the monolith substrate 1, and hence it is possible to more efficiently perform the suction removal of the excessive precursor solution.

Furthermore, it is confirmed that when the separation membrane is produced by the conventional producing process, thick membrane portions are more frequently generated on the side of a vertically downward end face (e.g., the side of the first end face) in the membrane forming step in which the abovementioned dip coating method is used. Therefore, the insides of the cells are sucked from the side of the vertically downward end face, so that a place where there is the possibility that thick membrane portions are more frequently generated can preferentially be sucked. In consequence, it is possible to further inhibit the generation of the thick membrane portion.

Fig. 4 shows an example of the case where the open ends of the cells 2 in the first end face 11 of the monolith substrate 1 are opened downward in the vertical direction. However, the open ends of the cells 2 in the second end face 12 of the monolith substrate 1 may be opened downward in the vertical direction. That is, the end face in which the open ends of the cells 2 open downward in the vertical direction may be the first end face 11 or the second end face 12 of the monolith substrate 1. When the membrane forming step in which the dip coating method is used as shown in Fig. 2 is performed, in the membrane forming step, the open ends of the cells 2 in the first end face 11 of the monolith substrate 1 are opened downward in the vertical direction sometimes. In such a case, the disposed state of the monolith substrate 1 is preferably maintained as it is, and then the cell suction step is preferably performed. That is, as shown in Fig. 2, the monolith substrate 1 is disposed so that the first end face 11 is on the downside to perform the membrane forming step, and after the end of the membrane forming step, the cell suction step may be performed while maintaining the state where the first end face 11 is on the downside as shown in Fig. 4.

There is not any restriction on a suction method in the cell suction step, but an example of the method is such a method as shown in Fig. 4. Specifically, first, one end of a hollow tubular member 21 is connected to an evacuatable suction pump 20. After the suction pump 20 is operated, the other end of the tubular member 21 is pressed onto the first end face 11 of the monolith substrate 1, to suck the insides of the cells 2 from the open ends of the cells 2 opened in the first end face 11. According to such a suction method, the suction removal of the excessive precursor solution can more efficiently be performed. As the tubular member 21, a hollow tube-like or hose-like member can be used. Furthermore, a jig to suitably regulate a suction diameter (e.g., reduce or enlarge the suction diameter) may be attached to a suction end of the tubular member.

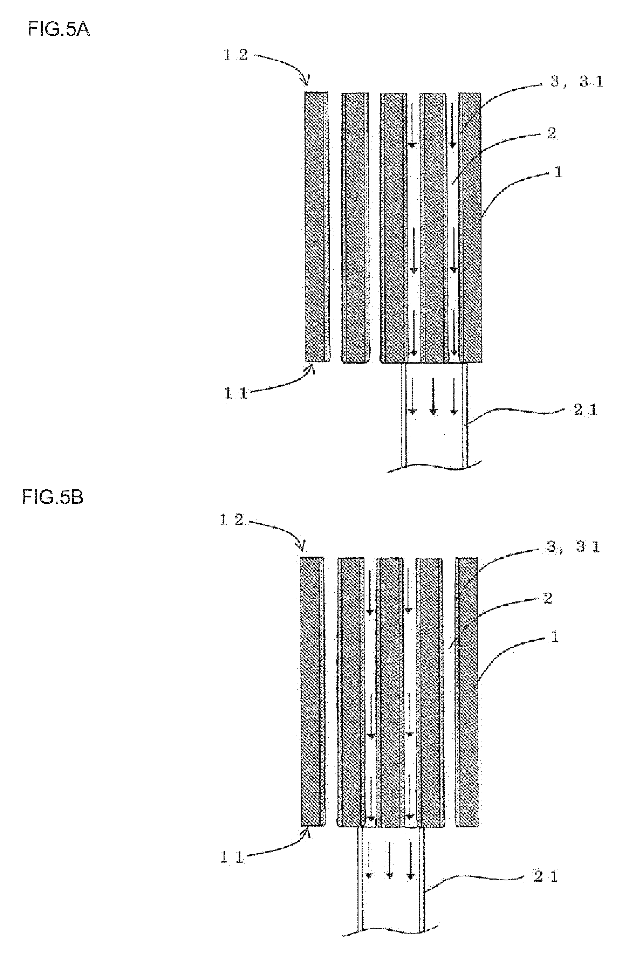

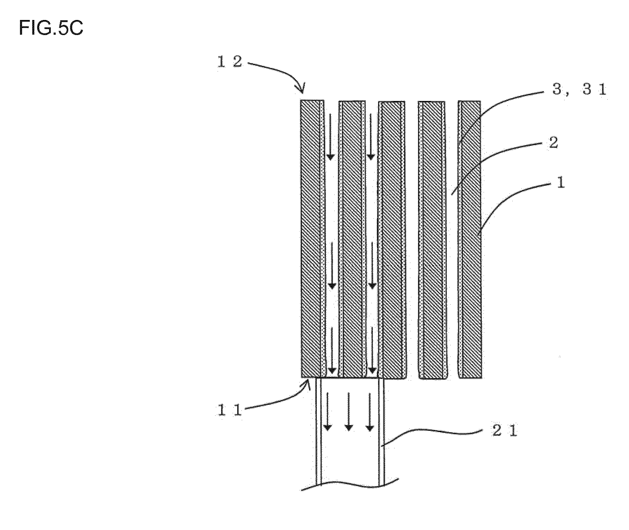

When the insides of the cells 2 are sucked by the tubular member 21 described above, it is preferable that the insides of the cells 2 as part of the cells 2 opened in the first end face 11 are sucked from the other end of the tubular member 21 and that the insides of all the cells 2 opened in the first end face 11 are successively sucked while changing a place to be sucked. For example, as shown in Fig. 5A, first, the other end of the tubular member 21 is pressed onto a part of the first end face 11 of the monolith substrate 1, to suck the insides of part of the cells 2. Afterward, as shown in Fig. 5B and Fig. 5C, it is preferable that a position onto which the other end of the tubular member 21 is pressed is moved, to successively suck the insides of the cells 2 which have not been sucked yet. Fig. 5A to Fig. 5C are explanatory views to explain the step of successively sucking the insides of cells in the cell suction step. Fig. 5A to Fig. 5C show a cross section of the monolith substrate which is parallel to the cell extending direction.

Fig. 5A to Fig. 5C show an example of the case where the insides of the cells 2 are successively sucked in the cell suction step. However, the insides of all the cells 2 opened in the first end face 11 may be sucked at a time. However, when the insides of all the cells 2 are sucked at a time, an amount of the excessive precursor solution varies with each of the respective cells 2, and hence the cells 2 having a large suction resistance are not sufficiently sucked sometimes. It is predicted that the amount of the excessive precursor solution is large in the cells 2 having the large suction resistance, and hence when the insides of such cells 2 are positively sucked, the insides of the cells 2 are more preferably sucked while moving the place to be sucked as described above.

There is not any restriction on the number of the cells 2 to be sucked at a time when the insides of the cells 2 are successively sucked. For example, the insides of the cells may be sucked every cell. Furthermore, for example, the insides of the cells may be sucked every two to 20 cells. When the number of the cells to be sucked at a time is excessively large, the suction of the cells having the large suction resistance is not sufficiently performed sometimes. When the number of the cells to be sucked at a time is excessively small, a time required for the suction step lengthens sometimes, which varies with the total number of the cells formed in the monolith substrate 1.

There is not any restriction on the time to suck the insides of the cells. For example, the suction time required per 1 cm$^2$ of the first end face of the monolith substrate is, for example, preferably from 0.1 to three minutes, further preferably from 0.3 to two minutes, and especially preferably from 0.5 to 1.5 minutes. When the suction time required per 1 cm$^2$ of the first end face of the monolith substrate is shorter than 0.1 minute, the suction of the insides of the cells is not sufficiently performed, and the excessive precursor solution disadvantageously largely remains in the cells. In the above range of the suction time, the suction removal of the excessive precursor solution can suitably be performed. For example, also when the suction time required per 1 cm$^2$ of the first end face of the monolith substrate is in excess of three minutes, any further excessive precursor solution is hardly discharged sometimes from the cells where the suction removal of the excessive precursor solution has sufficiently been performed.

The cell suction step is a step of sucking and removing the excessive precursor solution, and hence the sucked state of the insides of the cells can be judged by "a ratio of a mass of the precursor solution to be sucked from the insides of the cells in the cell suction step to a mass of the precursor solution adhered to the insides of the cells". The abovementioned "mass of the precursor solution adhered to the insides of the cells" means an actual mass of the precursor solution actually adhered to the insides of the cells in the membrane forming step. "The mass of the precursor solution adhered to the insides of the cells" can be calculated by obtaining a difference between an amount of the precursor solution used in the membrane forming step and an amount of the precursor solution recovered after the membrane forming step. Furthermore, "the mass of the precursor solution to be sucked from the insides of the cells in the cell suction step" can be obtained by disposing a waste liquid trap or the like in the tubular member to suck the insides of the cells, recovering the precursor solution to be sucked and measuring a mass of the recovered solution. Hereinafter, "the ratio of the mass of the precursor solution to be sucked from the insides of the cells in the cell suction step to the mass of the precursor solution adhered to the insides of the cells in the membrane forming step" will simply be referred to as "a ratio (%) of the mass of the precursor solution to be sucked" or "a suction amount (%)" sometimes.

In the cell suction step, the above ratio (%) of the mass of the precursor solution to be sucked is preferably from 0.1 to 10%, further preferably from 0.5 to 5%, and especially preferably from 1.5 to 2.5%. When the ratio (%) of the mass of the precursor solution to be sucked is smaller than 0.1%, the excessive precursor solution still remains in the cells sometimes. When the ratio (%) of the mass of the precursor solution to be sucked is in excess of 10%, the precursor solution constituting a normal separation membrane precursor is disadvantageously discharged to the outside of the cells by the suction.

Furthermore, in the above cell suction step, an amount of a gas to be sucked per cell is preferably from 0.2 to 5 L/min, further preferably from 1 to 3 L/min, and especially preferably from 1.5 to 2.5 L/min. When the amount of the gas to be sucked per cell is smaller than 0.2 L/min, the excessive precursor solution easily remains in the cells. When the amount of the gas to be sucked per cell is in excess of 5 L/min, a place which is partially excessively sucked is easily generated.

In the cell suction step, as shown in Fig. 4, the monolith substrate 1 is disposed so that the cells 2 extend in the vertical direction, and the state is held for a predetermined time. Afterward, the insides of the cells 2 may be sucked from the open ends of the cells 2 in the first end face 11 of the monolith substrate 1. Specifically, after the state where the monolith substrate 1 is disposed so that the cells 2 extend in the vertical direction is held for 60 minutes or less, the insides of the cells 2 may be sucked. Needless to say, the insides of the cells 2 may be sucked immediately after the monolith substrate 1 is disposed so that the cells 2 extend in the vertical direction. The state where the monolith substrate is disposed so that the cells 2 extend in the vertical direction is held for 60 minutes or less, an excessive portion of the precursor solution 31 disadvantageously drips on the side of the first end face 11 due to a self-weight. Therefore, the suction from the open ends of the cells 2 opened in the first end face 11 can more suitably be performed. That is, the abovementioned state of the monolith substrate 1 is held for 60 minutes or less, so that a necessary suction time can be shortened. When the monolith substrate 1 is held, the monolith substrate 1 is preferably held in such a stable state that the monolith substrate 1 does not move. When the above holding time is excessively short, an amount of the precursor solution 31 dripped due to the self-weight is small, and hence the effect of shortening the suction time cannot sufficiently be obtained sometimes. Furthermore, also when the above holding time is in excess of 60 minutes, the amount of the precursor solution 31 dripped due to the self-weight hardly increases any more sometimes. Furthermore, even when the suction of the insides of the cells 2 is started immediately after the monolith substrate 1 is disposed so that the cells 2 extend in the vertical direction, the precursor solution drips due to the self-weight during the suction of the insides of the cells 2, which enhances the efficiency of the suction sometimes.

(1-3) Drying Step:

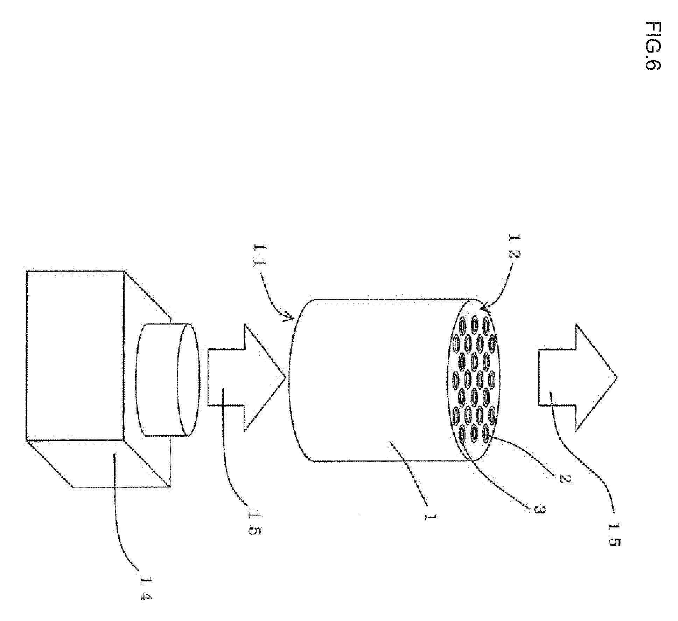

In the process for producing the separation membrane of the present embodiment, the drying step of drying the formed separation membrane precursor is performed after the above cell suction step. There is not any restriction on a method of drying the separation membrane precursor, and a drying method in the heretofore known process for producing the separation membrane can suitably be used. For example, as shown in Fig. 6, the separation membrane precursor 3 is preferably dried by performing passed-air drying in which hot air 15 is passed through the cells 2 of the monolith substrate 1 on which the separation membrane precursor 3 is formed. The drying of the separation membrane precursor 3 is performed by the passed-air drying, so that the separation membrane precursor 3 can suitably be dried while uniformly bringing heat transfer from the surface of the separation membrane precursor 3 to a whole of the separation membrane precursor 3. In consequence, the whole of the separation membrane precursor 3 can uniformly be dried without any unevenness. Here, Fig. 6 is an explanatory view showing one example of the drying step in the one embodiment of the process for producing the separation membrane of the present invention.

Fig. 6 shows an example of a case where in the drying step, a drier 14 is disposed on the side of the first end face 11 of the monolith substrate 1, and the hot air 15 is fed from the drier 14 toward the first end face 11 of the monolith substrate 1 to perform hot air drying. The hot air 15 is fed as described above, whereby the hot air 15 heated at a predetermined temperature is fed from the open ends of the cells 2 opened in the first end face 11 of the monolith substrate 1. Furthermore, the hot air 15 allowed to flow through the cells 2 is discharged from the open ends of the cells 2 opened on the side of the second end face 12 of the monolith substrate 1. The hot air 15 (a passed gas) is passed through the cells 2 in this manner, whereby the separation membrane precursor 3 formed on the surfaces of the cells 2 dries. In such passed-air drying, the whole of the separation membrane precursor 3 of a polyamide acid membrane or the like is uniformly heated by the hot air 15, and the drying or imidization uniformly proceeds from the surface of the separation membrane precursor 3.

In the passed-air drying, a temperature of the hot air to be passed through the cells is preferably from 30 to 300°C, more preferably from 50 to 200°C, and further preferably from 70 to 190°C. When the temperature of the hot air is lower than 30°C, time is excessively required until the separation membrane precursor dries sometimes. When the temperature of the hot air is in excess of 300°C, the separation membrane precursor disadvantageously burns during the drying for a long time sometimes.

Furthermore, a wind speed of the hot air is preferably from 0.5 to 30 m/s, more preferably from 1 to 15 m/s, and further preferably from 5 to 10 m/s. The wind speed of the hot air is the speed of the hot air during the passing through the cells. When the wind speed of the hot air is lower than 0.5 m/s, the drying or imidization of the separation membrane precursor becomes non-uniform sometimes. When the wind speed of the hot air is in excess of 30 m/s, movement of the solution in the separation membrane precursor occurs, and the membrane formation becomes non-uniform sometimes.

When the precursor solution is the polyamide acid solution, the separation membrane precursor is preferably dried and imidized in this drying step.

Furthermore, when the monolith substrate 1 has a whole outer diameter of 100 to 200 mm and a length of 200 to 2000 mm in the cell extending direction, i.e., a large diameter and a long length, cracks are generated in the monolith substrate due to thermal expansion sometimes during the imidization of the separation membrane precursor sometimes. Therefore, the abovementioned imidization is not performed by the passed-air drying, but imidization drying means (an imidization furnace) capable of controlling a temperature raising rate may be used.

As described above, when the membrane forming step, the cell suction step and the drying step are performed once and a membrane thickness of the dried separation membrane precursor is not a desirable thickness, the membrane forming step, the cell suction step and the drying step may repeatedly be performed a plurality of times (e.g., three to five times) until the desirable membrane thickness is obtained.

(1-4) Carbonizing Step:

The process for producing the separation membrane of the present embodiment may further include a carbonizing step of thermally decomposing and carbonizing the separation membrane precursor dried by the drying step to obtain the separation membrane. This carbonizing step is a step to be performed when the separation membrane to be produced is a carbon membrane.

For example, when the precursor solution is the polyamide acid solution, the separation membrane precursor obtained through the membrane forming step and the drying step is imidized to obtain a polyimide membrane, and the obtained polyimide membrane is thermally decomposed and carbonized, so that the separation membrane (the carbon membrane) can be obtained.

When the membrane forming step, the cell suction step and the drying step are repeatedly performed a plurality of times, the carbonizing step is preferably performed after all of the required times of the membrane forming step, the cell suction step and the drying step are ended and the separation membrane precursor having the desirable membrane thickness is obtained.

When the carbonizing step is performed, the step is preferably performed in vacuum or in a reducing atmosphere such as a nitrogen atmosphere or an argon atmosphere. A temperature during the performing of the carbonizing step is preferably from 400 to 1000°C. The separation membrane can be obtained by thermally decomposing and carbonizing the dried separation membrane precursor (more specifically, the polyimide membrane) in such a temperature range. For example, when the carbonization is performed at a temperature lower than 400 °C, the polyimide membrane is not sufficiently carbonized, so that a selectivity as a molecular sieve membrane or a permeation speed deteriorates sometimes. On the other hand, when the carbonization is performed at a temperature in excess of 1000°C, pore diameters of the separation membrane contract, thereby decreasing the permeation speed.

A membrane thickness of the separation membrane to be finally obtained is preferably from 0.1 to 10 $\mu$m, and more preferably from 0.5 to 5 $\mu$m. When the membrane thickness of the separation membrane is smaller than 0.1 $\mu$m, the membrane thickness is not sufficient and hence it is difficult to sufficiently obtain the selectivity sometimes, and when the membrane thickness is in excess of 10 $\mu$m, the membrane thickness is excessively large and hence a permeation flow rate is excessively small sometimes.

There is not any restriction on a use application of the separation membrane to be produced by the process for producing the separation membrane of the present embodiment. For example, when the separation membrane produced by the process for producing the separation membrane of the present embodiment is used in separation of water and ethanol, a high separation performance can be obtained. Such a separation membrane can suitably be used as a separation membrane when ethanol is recovered from a liquid mixture containing water and ethanol obtained from a biomass.

(2) Process for Producing Separation Membrane Composite:

Next, one embodiment of a process for producing a separation membrane composite of the present invention will be described. According to the process for producing the separation membrane composite of the present embodiment, it is possible to produce the separation membrane composite including a tubular porous monolith substrate in which a plurality of cells are formed to extend from a first end face to a second end face, and a separation membrane deposited on the surfaces of the cells of this monolith substrate.

In the process for producing the separation membrane composite of the present embodiment, the separation membrane constituting the separation membrane composite is prepared in accordance with the process for producing the separation membrane of the present invention. That is, the process for producing the separation membrane composite of the present embodiment is a separation membrane composite producing method including a step of preparing the separation membrane in the cells of the porous monolith substrate by the hitherto described process for producing the separation membrane of the present invention.

According to such a process for producing the separation membrane composite of the present embodiment, it is possible to simply produce the separation membrane composite including the separation membrane having less thick membrane portions where a thickness of the separation membrane partially increases. In the separation membrane composite produced by the process for producing the separation membrane composite of the present embodiment, the separation membrane does not easily peel from the surface of each cell, and damages such as cracks are not easily generated in the separation membrane. Furthermore, defects such as the abovementioned peeling of the separation membrane and the cracks in the separation membrane are not easily generated, and hence the separation performance of the separation membrane does not easily deteriorate, so that a suitable separation performance can be maintained.

In the process for producing the separation membrane composite of the present embodiment, the step of preparing the separation membrane, selection of the monolith substrate and the like can be performed in conformity with the hitherto described process for producing the separation membrane of the present embodiment.

(3) Separation Membrane Composite:

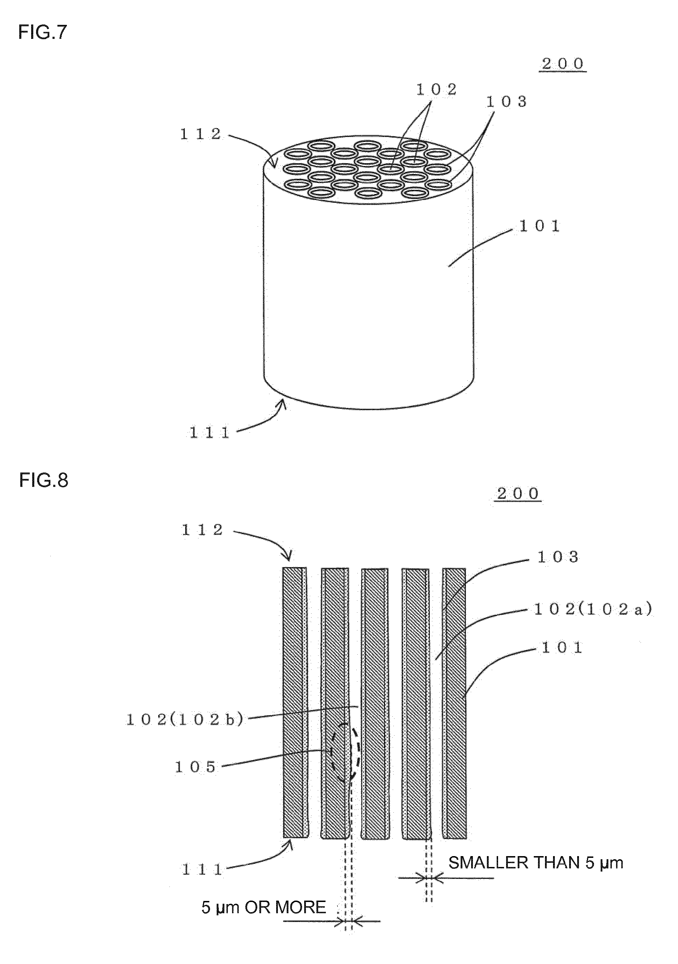

Next, one embodiment of the separation membrane composite of the present invention will be described. The separation membrane composite of the present embodiment is a separation membrane composite 200 including a porous monolith substrate 101 and a separation membrane 103 as shown in Fig. 7 and Fig. 8. The monolith substrate 101 is a tubular substrate in which a plurality of cells 102 are formed to extend from a first end face 111 to a second end face 112. The separation membrane 103 is deposited on the surfaces of the cells 102 formed in the monolith substrate 101. Fig. 7 is a perspective view schematically showing one embodiment of the separation membrane composite of the present invention. Fig. 8 is a sectional view schematically showing a cross section cut in parallel with a cell extending direction in the one embodiment of the separation membrane composite of the present invention.

In the separation membrane composite 200 of the present embodiment, a ratio of the number of cells 102a which do not have a thick membrane portion 105 where a thickness of the separation membrane 103 is 5 μm or more to the number of all the cells 102 is 80% or more.

That is, on the surfaces of the plurality of cells 102 formed in the monolith substrate 101, the separation membrane 103 is deposited from the first end face 111 to the second end face 112. Here, a portion where a thickness of the separation membrane 103 is 5 μm or more is referred to as the thick membrane portion 105. In the separation membrane 103 deposited on the surface of one cell 102, the cell 102 in which the portion whose thickness is 5 μm or more is present is a cell 102b having the thick membrane portion 105. On the other hand, in the separation membrane 103 deposited on the surface of the one cell 102, the cell 102 in which the portion whose thickness is 5 μm or more is not present is the cell 102a which does not have the thick membrane portion 105. In other words, in the cell 102a which does not have the thick membrane portion 105, the thickness of the separation membrane 103 deposited on the surface of the cell 102a is smaller than 5 μm. In the separation membrane composite 200 of the present embodiment, the ratio of the number of the cells 102a which do not have the thick membrane portion 105 to the number of all the cells 102 is 80% or more. In other words, a ratio of the number of the cells 102b each having the thick membrane portion 105 to the number of all the cells 102 is smaller than 20%.

When a very large number of the cells 102b each having the thick membrane portion 105 are present, the separation performance of the separation membrane 103 worsens. That is, when the ratio of the number of the cells 102a which do not have the thick membrane portion 105 is smaller than 80%, the separation performance of the separation membrane 103 worsens. For example, the separation membrane 103 is deposited on the surface of the cell 102 in a closely contacted state, but when the thick membrane portion 105 is present in the separation membrane 103, the separation membrane 103 easily peels from this thick membrane portion 105. Furthermore, in the thick membrane portion 105 in which the separation membrane locally thickens, defects such as the cracks are easily generated sometimes.

In the separation membrane composite 200 of the present embodiment, the ratio of the number of the cells 102a which do not have the thick membrane portion 105 to the number of all the cells 102 is preferably 90% or more, and further preferably 95% or more. In the separation membrane composite 200 of the present embodiment, all the cells 102 are especially preferably the cells 102a which do not have the thick membrane portion 105.

The separation membrane composite 200 of the present embodiment can be produced by the hitherto described process for producing the separation membrane of the present invention. That is, in the conventional producing process, it has not been possible to set the ratio of the number of the cells 102a which do not have the thick membrane portion 105 to 80% or more. The separation membrane is produced on the surfaces of the cells formed in the monolith substrate by the hitherto described process for producing the separation membrane of the present invention, so that it is possible to suitably produce the separation membrane composite in which the ratio of the number of the cells which do not have the thick membrane portion is 80% or more.

In the separation membrane composite 200 of the present embodiment, an average thickness of the separation membrane 103 deposited on the surfaces of the cells 102 is preferably from 0.1 to 3 μm, further preferably from 0.5 to 3 μm, and especially preferably from 1 to 3 μm. When the average thickness of the separation membrane 103 is smaller than 0.1 μm, the separation membrane itself is excessively thin, which disadvantageously deteriorates a separation performance of the separation membrane composite 200 sometimes. On the other hand, when the average thickness of the separation membrane 103 is in excess of 3 μm, membrane defects such as the cracks and the membrane peeling are easily generated in the separation membrane, so that an ethanol leakage amount excessively becomes large sometimes.

The thickness of the separation membrane can be measured by the following method. First, a monolith substrate in which the separation membrane is formed is broken to tear in an extending direction of cells. Then, cross sections of the cells are observed by a SEM (a scanning type electron microscope), and a membrane thickness of the separation membrane is measured. As to each of all the cells formed in the monolith substrate, there is measured a membrane thickness of a portion where the membrane thickness of the separation membrane is maximum is measured. When a maximum portion of the membrane thickness of the separation membrane formed on the surface of each cell is 5 μm or more, the cell corresponds to the cell having the thick membrane portion. On the other hand, when the maximum portion of the membrane thickness of the separation membrane formed on the surface of each cell is smaller than 5 μm, the cell corresponds to the cell which does not have the thick membrane portion. By such measurement of the thickness of the separation membrane, it is also possible to obtain the ratio of the number of the cells which do not have the thick membrane portion.

The average thickness of the separation membrane can be measured by the following method. First, the monolith substrate in which the separation membrane is formed is broken to tear in the extending direction of the cells. Then, the cross sections of the cells are observed by the SEM (the scanning type electron microscope), and the membrane thickness of the separation membrane is measured. Such measurement of the membrane thickness of the separation membrane is performed at ten or more positions per cell. An average value of the membrane thicknesses measured at the respective positions is calculated. This average value is "the average thickness of the separation membrane".

Suitable examples of a material of the monolith substrate include ceramic materials such as alumina, silica, cordierite, mullite, titania, zirconia, and silicon carbide from the viewpoint of a strength or a chemical stability. A porosity of the monolith substrate is preferably from 25 to 55% from the viewpoints of the strength and a permeability of the porous substrate. Furthermore, an average pore diameter of the porous substrate is preferably from 0.005 to 5 $\mu$m. The porosity and average pore diameter of the porous substrate are values measured by a mercury porosimeter.

As to a shape of the monolith substrate, for example, a shape of a cross section perpendicular to the cell extending direction is preferably a round shape, an oval shape, or a polygonal tubular shape. The whole outer diameter of the monolith substrate is preferably from 10 to 300 mm, further preferably from 20 to 250 mm, and especially preferably from 30 to 200 mm. When the whole outer diameter of the monolith substrate is smaller than 10 mm, the number of the cells which can be formed in the monolith substrate becomes small sometimes. Furthermore, when the whole outer diameter of the monolith substrate is in excess of 300 mm, the monolith substrate is excessively large, so that it is difficult to produce the separation membrane sometimes. In the present description, "the whole outer diameter of the monolith substrate" means a diameter of the cross section (i.e., a circle) when the shape of the cross section of the monolith substrate which is perpendicular to the cell extending direction is the circle. Furthermore, "the whole outer diameter of the monolith substrate" means a diameter of a circle which has the same size of sectional area as in the cross section when the shape of the cross section of the monolith substrate which is perpendicular to the cell extending direction is not the circle.

A length of the monolith substrate in the cell extending direction is preferably from 30 to 2000 mm, further preferably from 100 to 1700 mm, and especially preferably from 150 to 1500 mm. When the length of the monolith substrate in the cell extending direction is smaller than 30 mm, a membrane area of the separation membrane becomes small sometimes. When the length of the monolith substrate in the cell extending direction is in excess of 2000 mm, it is difficult to produce and handle the monolith substrate sometimes. Furthermore, in consideration of the membrane area per volume and the strength, the number of the cells to be formed in the monolith substrate is preferably from 1 to 10000, preferably from 10 to 5000, and preferably from 30 to 2500. When the number of the cells is in excess of 10000, it is difficult to produce and handle the monolith substrate sometimes.

There is not any restriction on a material of the separation membrane, as long as it is possible to separate at least one type of component from each kind of mixture. In the separation membrane composite of the present embodiment, the separation membrane is preferably a carbon membrane. For example, as a precursor solution of the separation membrane, the carbon membrane prepared by using a polyimide solution is a suitable example. Such a carbon membrane can be produced by performing the membrane forming step, the cell suction step, the drying step, and the carbonizing step described in the abovementioned one embodiment of the process for producing the separation membrane of the present invention.

The polyamide acid solution is obtained by dissolving polyamide acid which is a precursor of polyimide resin in an appropriate organic solvent such as N-methyl-2-pyrrolidone (NMP) or N, N-dimethyl acetamide (DMAc). There is not any restriction on a concentration of polyamide acid in the polyamide acid solution, but from the viewpoint of a viscosity at which a membrane of the solution is easily formed, the concentration is preferably from 1 to 20 mass%. The concentration of polyamide acid in the polyamide acid solution is further preferably from 3 to 15 mass%, and especially preferably from 5 to 10 mass%.

Examples

Hereinafter, the present invention will be described in more detail on the basis of examples, but the present invention is not limited to these examples.

(Example 1)

First, there was prepared a porous monolith substrate which was a substrate for production of a separation membrane. A material of the monolith substrate was alumina. A shape of the monolith substrate was a cylindrical shape having a first end face and a second end face, in which a diameter of these first end face and second end face was 30 mm, and a length in an extending direction of cells was 1000 mm. In this monolith substrate, there were formed 50 cells extending from the first end face to the second end face. A shape of each open end of each cell was round. A diameter of each open end of one cell was 2.5 mm.

Prior to performing a membrane forming step, a sealing tape was wound around an outer peripheral surface of the above monolith substrate, to prevent a precursor solution from being adhered to a portion other than the surfaces of the cells of the monolith substrate.

Such a monolith substrate was disposed so that the cell extending direction was a vertical direction, and the precursor solution was fed into each cell by use of a liquid feeding pump (the membrane forming step). As the precursor solution, there was used a polyamide acid solution (U-Varnish-A (trade name) of UBE Industries, Ltd.) using N-methyl-2-pyrrolidone (NMP) as a solvent and having a polyamide acid concentration of 10 mass%. When the precursor solution was fed into the cells, the precursor solution was fed into each cell from one open end thereof at a rate of 200 cm/min for 30 seconds. By such a membrane forming step, a polyamide acid membrane as a separation membrane precursor was formed in the cells of the monolith substrate. A viscosity of the used polyamide acid solution at 25°C was 0.15 Pa·s.

Next, the monolith substrate was disposed so that the open ends of the cells in the first end face of the monolith substrate on which the polyamide acid membrane was formed were opened downward in the vertical direction and so that the cells extended in the perpendicular direction. Then, the insides of the cells were sucked from the open ends of the cells in the first end face of the monolith substrate, thereby performing a cell suction step to remove a part of the polyamide acid solution. The suction of the insides of the cells was performed by connecting one end of a suction tube having an inner diameter of 6 mm to a suction pump and pressing the other end of this suction tube onto the first end face of the monolith substrate. As the suction tube, a silicon tube was used. When the other end of the suction tube was pressed onto the first end face of the monolith substrate, the other end of the suction tube was moved evenly on the first end face to uniformly suck and remove the polyamide acid solution successively from all the cells. The suction of the insides of the cells was performed for 15 minutes. Specifically, the other end of the suction tube was moved evenly on the first end face for 15 minutes to perform the suction of the insides of the cells. By this suction of the insides of the cells, the polyamide acid solution excessively applied to the insides of the cells was sucked and removed, to prepare the separation membrane precursor having a predetermined membrane thickness.

A suction time per 1 cm² of the first end face of the monolith substrate was 2.12 minutes. The above "suction time per 1 cm²" was a value calculated when an inner diameter of the suction tube was 6 mm, while a sectional area of the monolith substrate was 7.07 cm², a cell area ratio was 34.7%, and a cell open end area was 2.45 cm². Furthermore, the suction pump having a suction capability of 12 L/min was used.

Prior to the cell suction step, a ratio of a mass of the polyamide acid solution removed by the suction to a mass of the polyamide acid solution adhered to the insides of the cells was obtained by the following equation (1). In the following equation (1), "the mass of the polyamide acid solution adhered to the insides of the cells" is "an amount of the adhered solution", and "the mass of the polyamide acid solution removed by the suction" is "an amount of the solution removed by the suction". Furthermore, the ratio of the mass of the polyamide acid solution removed by the suction as represented by the following equation (1) will hereinafter be referred to also as "a suction amount (%)".

$$\text{Suction amount (\%)} = \text{the amount of the solution removed by the suction/the amount of the adhered solution} \times 100 \quad \dots (1)$$

Table 1 shows a diameter (mm) of an end face of a monolith substrate, a length (mm) in a cell extending direction, a cell number (cells), and a cell diameter (mm). It is to be noted that the diameter (mm) of the end face of the monolith substrate corresponds to the diameter of the first end face and the second end face of the monolith substrate, the cell number (the cells) corresponds to the number of the cells formed in the monolith substrate, and the cell diameter corresponds to the diameter of each open end of each cell. Table 1 shows a suction time (min) of suction of the insides of the cells, and the suction amount (%). It is to be noted that the suction amount (%) is a suction amount (%) in the cell suction step performed after the end of a first membrane forming step. Furthermore, in a column of "cell suction step" in Table 1 shows a result that the abovementioned cell suction step was performed or not during the producing of the separation membrane. That is, "present" in the column of "cell suction step" indicates that the cell suction step of sucking the insides of the cells is performed. Furthermore, "none" in the column of "cell suction step" indicates that the suction of the insides of the cells is not performed.

Furthermore, in the suction of the insides of the cells, when the other end of the suction tube is moved on the first end face to perform the suction, "partial" is described in a column of "suction method" in Table 1. In the suction of the insides of the cells, when the other end of the suction tube connected to the suction pump is enlarged up to a size of the first end face of the monolith substrate to suck the insides of all the cells from the entire region of the first end face of the monolith substrate at a time, "entire" is described in the column of "suction method" in Table 1.

The cell suction step was performed, and then a drying step was performed to dry and imidize the separation membrane precursor made of the polyamide acid membrane. First, hot air of 150°C was passed through the cells from the open ends in the first end face toward the open ends in the second end face over 70 minutes, to dry the separation membrane precursor. A wind speed of the hot air was 10 m/s. When the hot air was passed, in the same manner as in the cell suction step, the passing was performed in a state where the monolith substrate was disposed so that the open ends of the cells in the first end face of the monolith substrate were opened downward in the vertical direction and so that the cells extended in the vertical direction. Afterward, the temperature of the hot air was further raised to 250°C, and the hot air was passed through the cells for 15 minutes. As described above, the separation membrane precursor made of the polyamide acid membrane was dried and imidized.

The abovementioned membrane forming step, cell suction step and drying step were performed as one set of steps, and the one set of steps were repeated three times. Afterward, the monolith substrate was subjected to a heat treatment at 800°C in a vacuum box furnace. By this heat treatment, a polyimide membrane obtained by the imidization was carbonized, so that a separation membrane (a carbon membrane) having a membrane thickness of about 1 $\mu$m was obtained.

Furthermore, a thickness of the obtained separation membrane was measured by the following method, and "a generation ratio (%) of a thick membrane portion" was obtained from the measurement result. First, a region of 50 mm from the first end face of the monolith substrate on which the separation membrane was formed was broken to tear in the cell extending direction. Then, cross sections of the cells were observed by a SEM (a scanning type electron microscope), and the membrane thickness of the separation membrane was measured. It is to be noted that the first end face of the monolith substrate is the end face on the downside of the vertical direction in the first membrane forming step, the cell suction step, and the drying step. As to each of all the cells formed in the monolith substrate, in the observed region, there was measured a membrane thickness of a portion where the membrane thickness of the separation membrane was maximum. A percentage of a value obtained by dividing, by the number of all the cells, the number of the cells in which a maximum portion of the membrane thickness of the separation membrane was 5 $\mu$m or more was "the generation ration (%) of the thick membrane portion". Table 1 shows the generation ratio (%) of the thick membrane portion of the separation membrane which was obtained in Example 1.

Furthermore, as the evaluation of the separation performance of the separation membrane obtained in Example 1, a pervaporation test was conducted by the following method.

[Pervaporation Test]

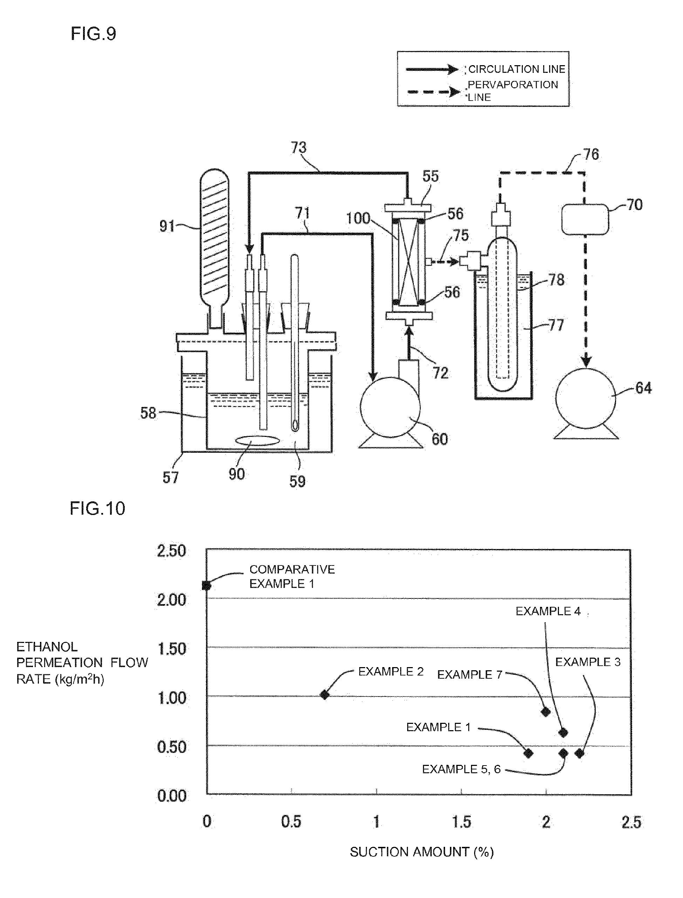

The pervaporation test was conducted by using such a pervaporation device as shown in Fig. 9. Fig. 9 is a schematic view of the pervaporation device used in the evaluation of a water/ethanol separation performance in the example. As shown in Fig. 9, a monolith substrate 100 on which a separation membrane was formed was received in a tubular container 55, and in outer peripheral portions of both ends of the monolith substrate 100, gaps from an inner peripheral surface of the container 55 were sealed with sealing materials 56. A supply liquid 59 warmed at a predetermined temperature in a beaker 58 put in a constant-temperature tank 57 was allowed to circulate through circulation lines 71 to 73 by a circulation pump 60, and was passed through cells of the monolith substrate 100 in the container 55 disposed in a middle of the circulation lines 71 to 73.

In this way, the outside of the monolith substrate 100 on a permeation side was brought into a vacuum state through pervaporation lines 75, 76 by a vacuum pump 64 while bringing the supply liquid 59 into contact with the separation membrane formed on the surfaces of the cells of the monolith substrate 100. Reduction of a secondary-side pressure was regulated by a vacuum controller 70, and permeated vapor passed through the separation membrane was trapped as a permeated liquid by a cooling trap 78 immersed in liquid nitrogen 77 on the pervaporation lines 75, 76.

It is to be noted that in Fig. 9, reference numeral 90 is a stirrer to stir the supply liquid 59, and reference numeral 91 is a cooling tube attached to an upper portion of the beaker 58. As the supply liquid 59, a water/ethanol mixture liquid having a water/ethanol ratio (a mass ratio) of 10/90 was used, and a temperature of the supply liquid was set to 70°C, to evaluate the water/ethanol separation performance of the separation membrane. In this evaluation of the separation performance, an ethanol permeation flow rate ($kg/m^2 h$) and a water permeation flow rate ($kg/m^2 h$) were used. Table 1 shows values of the ethanol permeation flow rate ($kg/m^2 h$) and the water permeation flow rate ($kg/m^2 h$).

[Table 1]

| | Cell suction step | Suction method | Shape of monolith substrate | | | | Suction time (min) | Suction amount (%) | Pervaporation test | | Generation ratio of thick membrane portion (%) |
|---|---|---|---|---|---|---|---|---|---|---|---|
| | | | Dia. of end face (mm) | Length in cell extending direction (mm) | Cell No. (cells) | Cell dia. (mm) | | | Ethanol permeation flow rate $(kg/m^2h)$ | Water permeation flow rate $(kg/m^2h)$ | |
| Example 1 | Present | Partial | 30 | 1000 | 50 | 2.5 | 15 | 1.9 | 0.43 | 1.33 | 0.0 |
| Example 2 | Present | Partial | 30 | 1000 | 50 | 2.5 | 2 | 0.7 | 1.02 | 1.40 | 18.0 |
| Example 3 | Present | Partial | 30 | 1000 | 50 | 2.5 | 30 | 2.2 | 0.43 | 1.34 | 2.0 |
| Example 4 | Present | Entire | 30 | 1000 | 50 | 2.5 | 15 | 2.1 | 0.64 | 1.36 | 8.0 |
| Example 5 | Present | Partial | 30 | 1000 | 35 | 2.5 | 15 | 2.1 | 0.43 | 1.40 | 2.9 |
| Example 6 | Present | Partial | 30 | 150 | 50 | 2.5 | 15 | 2.1 | 0.43 | 1.54 | 2.0 |
| Example 7 | Present | Partial | 200 | 1000 | 3000 | 2.5 | 15 | 2.0 | 0.85 | 1.37 | 12.6 |
| Comparative Example 1 | None | - | 30 | 1000 | 50 | 2.5 | - | 0 | 2.13 | 1.39 | 60.0 |

(Examples 2 and 3)

The procedures of Example 1 were repeated except that a suction time in a cell suction step was changed as shown in Table 1, to produce separation membranes. As to the obtained separation membranes, a generation ratio (%) of a thick membrane portion was obtained. Furthermore, as to the obtained separation membranes, a pervaporation test was conducted. The respective results are shown in Table 1.

(Example 4)

The procedures of Example 1 were repeated except that a suction method in a cell suction step was changed to be "entire" as shown in Table 1, to produce a separation membrane. As to the obtained separation membrane, a generation ratio (%) of a thick membrane portion was obtained. Furthermore, as to the obtained separation membrane, a pervaporation test was conducted. The respective results are shown in Table 1.

(Examples 5 to 7)

The procedures of Example 1 were repeated except that as monolith substrates, there were used the monolith substrates each having "a diameter of an end face", "a length in a cell extending direction", "a cell number", and "a cell diameter" as shown in Table 1, to produce separation membranes. As to the obtained separation membranes, a generation ratio (%) of a thick membrane portion was obtained. Furthermore, as to the obtained separation membranes, a pervaporation test was conducted. The respective results are shown in Table 1.

(Comparative Example 1)

In Comparative Example 1, after a membrane forming step, a cell suction step was not performed, but a drying step was performed to produce a separation membrane. The membrane forming step and the drying step were performed by methods similar to those of Example 1. As to the obtained separation membrane, a generation ratio (%) of a thick membrane portion was obtained. Furthermore, as to the obtained separation membrane, a pervaporation test was conducted. The respective results are shown in Table 1.

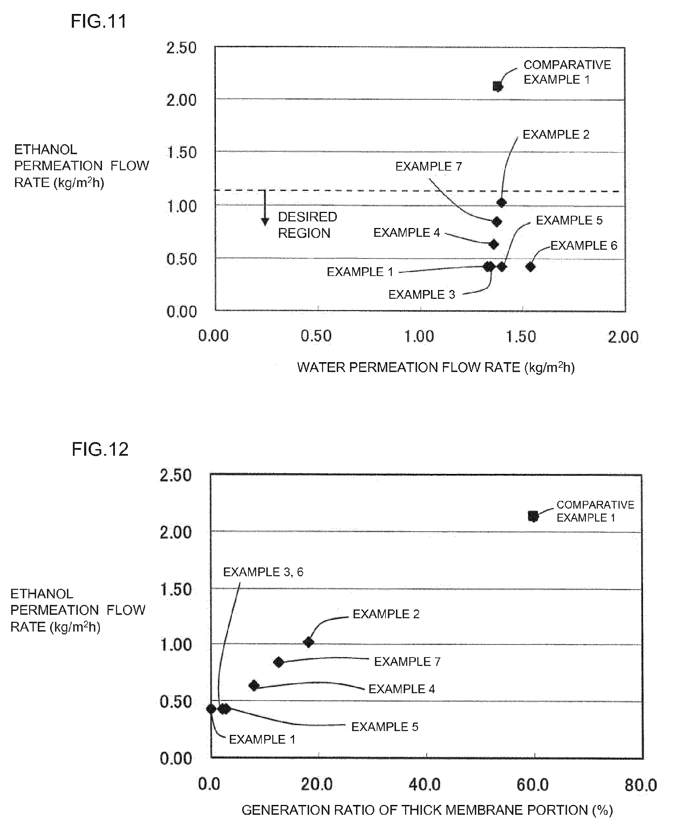

Furthermore, from the respective results of the respective examples and the comparative example, graphs shown in Fig. 10 to Fig. 12 were prepared. Fig. 10 is the graph showing a relation between a suction amount (%) and an ethanol permeation flow rate ($kg/m^2h$) in the respective examples and the comparative example. Fig. 11 is the graph showing a relation between a water permeation flow rate ($kg/m^2h$) and the ethanol permeation flow rate ($kg/m^2h$) in the respective examples and the comparative example. Fig. 12 is the graph showing a relation between a generation ratio (%) of a thick membrane portion and the ethanol permeation flow rate ($kg/m^2h$). In Fig. 10 to Fig. 12, the ordinate indicates the ethanol permeation flow rate ($kg/m^2h$). Fig. 11 shows a desired region of a separation performance of the separation membrane in the relation between the water permeation flow rate ($kg/m^2h$) and the ethanol permeation flow rate ($kg/m^2h$). That is, it can be considered that the separation membrane exhibits a suitable separation performance, when values of the water permeation flow rate ($kg/m^2h$) and the ethanol permeation flow rate ($kg/m^2h$) are present in a region below a broken line indicating the desired region in Fig. 11.

(Results)

As shown in Table 1 and Fig. 12, the separation membranes obtained in Examples 1 to 7 had a low generation ratio of the thick membrane portion and a uniform membrane thickness. Furthermore, as shown in Table 1, Fig. 11 and Fig. 12, in the separation membranes obtained in Examples 1 to 7, the water permeation flow rate and the ethanol permeation flow rate fell in the desired region of the separation performance, and hence the separation membranes exhibited a suitable separation performance.

On the other hand, the separation membrane obtained in Comparative Example 1 noticeably deviated from the desired region of the separation performance, and had a poor separation performance. As a cause for the problem, it is considered that in the membrane forming step, the excessive polyamide acid solution remained in the cells, the drying step was performed while this excessive polyamide acid solution remained as it was, and hence a very large number of portions where a membrane thickness partially increased were present in the obtained separation membrane. That is, in the separation membrane obtained in Comparative Example 1, the generation ratio of the thick membrane portion was extremely large as compared with Examples 1 to 7, and hence it is assumed that defects such as the peeling of the separation membrane from the thick membrane portion and the generation of cracks in the thick membrane portion were caused.

In the results of Examples 1 to 7, when the first end face and the second end face of the monolith substrate had the same size, a large difference was not seen in the suction amount (%) or the generation ratio (%) of the thick membrane portion even in a case where the length in the cell extending direction changed or a case where the number of the cells changed. Furthermore, concerning the suction method, the suction method by partial suction was capable of lowering the generation ratio (%) of the thick membrane portion as compared with the suction method by entire suction. That is, in Example 1 including the suction method by the partial suction and Example 4 including the suction method by the entire suction, Example 4 had a larger suction amount (%), but had a high generation ratio (%) of the thick membrane portion. From this fact, it can be considered that in the suction method by the entire suction, the excessive precursor solution was more preferentially sucked from cells having a small suction resistance. Needless to say, also in the suction method by the entire suction, the separation performance of the separation membrane was sufficiently suitable.

Furthermore, in Example 2 in which the suction time was two minutes, the suction amount in the cell suction step was smaller as compared with the other examples. Furthermore, in proportion to this suction amount, the generation ratio of the thick membrane portion was high. Furthermore, in the conventional process for producing the separation membrane, there is a tendency that the generation ratio of the thick membrane portion is high, when the diameter of each of the first end face and the second end face of the monolith substrate is large. However, when the cell suction step is performed as in Example 7, it is possible to suppress the generation ratio of the thick membrane portion. Furthermore, from the results of Examples 1 to 7, in the process for producing the separation membrane of the present invention, there is recognized a correlation between the abovementioned suction time and suction amount, and the generation ratio (%) of the thick membrane portion, and hence a time to end the cell suction step is preferably judged by the suction time or the suction amount.

Industrial Applicability

The present invention can suitably be utilized in producing a separation membrane for use in separation of each type of mixture, for example, the separation of water and ethanol in a biomass field.

Description of Reference Numerals

1: monolith substrate, 2: cell, 3: separation membrane precursor, 11: first end face, 12: second end face, 14: drier, 15: hot air, 20: suction pump, 21: tubular member, 31: precursor solution, 32: membrane forming container, 33: sealing material, 55: container, 56: sealing material, 57: constant-temperature tank, 58: beaker, 59: supply liquid, 60: circulation pump, 64: vacuum pump, 70: vacuum controller, 71, 72 and 73: circulation line, 75 and 76: pervaporation line, 77: liquid nitrogen, 78: cooling trap, 90: stirrer, 91: cooling tube, 100: monolith substrate (the monolith substrate on which a separation membrane is formed), 101: monolith substrate, 102: cell, 102a: cell (a cell which does not have a thick membrane portion), 102b: cell (a cell having the thick membrane portion), 103: separation membrane, 105: thick membrane portion, 111: first end face, 112: second end face, and 200: separation membrane composite.

**Claims**

1. A process for producing a separation membrane comprising:

   a membrane forming step of passing a precursor solution of the separation membrane through cells of a tubular porous monolith substrate in which a plurality of cells are formed to extend from a first end face to a second end face, to form a separation membrane precursor made of the precursor solution on the surfaces of the cells;
   a cell suction step of sucking the insides of the cells on which the separation membrane precursor is formed, from open ends of the cells in the first end face or the second end face of the monolith substrate; and
   a drying step of drying the separation membrane precursor formed on the surfaces of the cells of the monolith substrate in which the insides of the cells are sucked.

2. The process for producing the separation membrane according to claim 1,
   wherein in the cell suction step, the monolith substrate is disposed so that the open ends of the cells in the first end face of the monolith substrate are opened downward in a vertical direction and so that the cells extend in the vertical direction, and the insides of the cells are sucked from the open ends of the cells in the first end face of the monolith substrate.

3. The process for producing the separation membrane according to claim 2,
   wherein in the cell suction step, the monolith substrate is disposed so that the cells extend in the vertical direction, the state is held for 60 minutes or less, and then the insides of the cells are sucked from the open ends of the cells in the first end face of the monolith substrate.

4. The process for producing the separation membrane according to any one of claims 1 to 3, wherein a ratio of a mass of the precursor solution to be sucked from the insides of the cells in the cell suction step to a mass of the precursor solution adhered to the insides of the cells in the membrane forming step is from 0.5 to 2.5%.

5. The process for producing the separation membrane according to any one of claims 1 to 4, wherein the drying step is a step of performing passed-air drying in which hot air is passed through the cells to dry the separation membrane precursor.

6. The process for producing the separation membrane according to any one of claims 1 to 5, wherein the membrane forming step, the cell suction step and the drying step are performed as one set of steps, and the one set of steps are repeatedly performed twice or more.

7. The process for producing the separation membrane according to any one of claims 1 to 6, further comprising:

   a carbonizing step of thermally decomposing and carbonizing the separation membrane precursor dried by the drying step to obtain the separation membrane.

8. The process for producing the separation membrane according to any one of claims 1 to 7, wherein the precursor solution is a polyamide acid solution.

9. The process for producing the separation membrane according to claim 8, wherein in the drying step, the separation membrane precursor is dried and imidized.

10. The process for producing the separation membrane according to any one of claims 1 to 9, wherein at least a part of an outer peripheral surface of the monolith substrate is sealed, and then the membrane forming step is performed.

11. A process for producing a separation membrane composite, comprising:

   producing a separation membrane in cells of a tubular porous monolith substrate in which the plurality of cells are formed to extend from a first end face to a second end face by the process for producing the separation membrane according to any one of claims 1 to 10, to produce the separation membrane composite comprising the monolith substrate and the separation membrane.

12. A separation membrane composite comprising:

   a tubular porous monolith substrate in which a plurality of cells are formed to extend from a first end face to a second end face; and
   a separation membrane deposited on the surfaces of the cells,
   wherein a ratio of the number of the cells which do not have a thick membrane portion where a thickness of the separation membrane is 5 $\mu$m or more to the number of all the cells is 80% or more.

13. The separation membrane composite according to claim 12, wherein the separation membrane is a carbon membrane.

14. The separation membrane composite according to claim 12 or 13, wherein an average thickness of the separation membrane deposited on the surfaces of the cells is from 0.1 to 3 $\mu$m.

FIG.1

FIG.2

FIG.3

FIG.4

FIG.5A

FIG.5B

FIG.5C

FIG.6

FIG.7

FIG.8

FIG.9

FIG.10

FIG.11

FIG.12

## INTERNATIONAL SEARCH REPORT

| International application No. |
|---|
| PCT/JP2013/052366 |

A. CLASSIFICATION OF SUBJECT MATTER
*B01D69/04*(2006.01)i, *B01D69/10*(2006.01)i, *B01D71/02*(2006.01)i, *B01D71/64* (2006.01)i

According to International Patent Classification (IPC) or to both national classification and IPC

B. FIELDS SEARCHED

Minimum documentation searched (classification system followed by classification symbols)
B01D69/04, B01D69/10, B01D71/02, B01D71/64

Documentation searched other than minimum documentation to the extent that such documents are included in the fields searched
| | | | |
|---|---|---|---|
| Jitsuyo Shinan Koho | 1922-1996 | Jitsuyo Shinan Toroku Koho | 1996-2013 |
| Kokai Jitsuyo Shinan Koho | 1971-2013 | Toroku Jitsuyo Shinan Koho | 1994-2013 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP 2010-99559 A  (NGK Insulators, Ltd.), 06 May 2010 (06.05.2010), paragraphs [0007], [0008], [0030], [0038], [0048] to [0057] (Family: none) | 1-14 |
| Y | JP 2011-502750 A  (Corning Inc.), 27 January 2011 (27.01.2011), paragraph [0141] & US 2009/0110907 A1    & EP 2212010 A & WO 2009/058206 A2 | 1-14 |
| A | JP 10-192780 A  (Yamaha Motor Co., Ltd.), 28 July 1998 (28.07.1998), paragraph [0007] (Family: none) | 1-14 |

| ☒ Further documents are listed in the continuation of Box C. | ☐ See patent family annex. |
|---|---|

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>    27 March, 2013 (27.03.13) | Date of mailing of the international search report<br>    09 April, 2013 (09.04.13) |
|---|---|
| Name and mailing address of the ISA/<br>    Japanese Patent Office | Authorized officer |
| Facsimile No. | Telephone No. |

Form PCT/ISA/210 (second sheet) (July 2009)

**INTERNATIONAL SEARCH REPORT**

International application No.

PCT/JP2013/052366

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2009-266951 A  (Dainippon Screen Mfg. Co., Ltd.), 12 November 2009 (12.11.2009), paragraph [0061] (Family: none) | 1-14 |

Form PCT/ISA/210 (continuation of second sheet) (July 2009)

**EP 2 826 544 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003286018 A
- WO 2008078442 A
- JP 2010089000 A